# EUROPEAN PATENT SPECIFICATION

(11) **EP 1 681 250 B1**
(45) Date of publication and mention of the grant of the patent: **15.10.2008**
(21) Application number: 06000564.2
(22) Date of filing: 12.01.2006
(51) Int. Cl.: B65G 47/71, B65G 47/14

(54) **Device for diverting articles from a packaging machine to stacking magazines**
Vorrichtung zum Umlenken von Gegenständen aus einer Verpackungsmaschine zu Stapelbehältern
Dispositif pour dérouter des articles d'une machine d'emballage vers des magasins de stockage

(30) Priority: 14.01.2005 IT BO20050015
(43) Date of publication of application: 19.07.2006
(73) Proprietor: C.M.C. S.p.A., 06011 Cerbara-Citta' di Castello (Perugia) (IT)
(72) Inventor: Ponti, Francesco, 06011 Cerbara-Citta Di Castello Perugia (IT); Ponti, Guiseppe, 06011 Cerbara-Citta Di Castello Perugia (IT)
(74) Representative: Dall'Olio, Giancarlo

(56) References cited:
- EP-A- 0 654 408
- FR-A- 1 345 206
- GB-A- 921 064
- GB-A- 1 579 961

## Description

### DESCRIPTION OF THE INVENTION

The present invention relates to the technical field concerning directing packaged articles into relative receiving magazines, more specificaly to a connection station according to the preamble of claim 1.

There are different types of machines for packaging articles wrapped with paper or plastic material; such machines feed, at their outlet, packaged articles, which are then directed, by e.g. conveying means, to receiving means, where they are piled up.

With reference to the above mentioned machines, examples can be taken of the European Patent No. 0.480.882, owned by the Applicant, concerning a "Machine for packaging books, magazines and the like, with paper" and of the International Patent Application No. PCT/IB2004/003251 concerning "Method and apparatus for packaging articles with a film of plastic material", the technical solutions described in these documents, concern machines and apparatuses, which can package up to 30000 articles per hour.

On the contrary, the present receiving magazines can pile up a smaller number of packaged articles, sometimes below 10000 units per hour.

Consequently, the high processing rate of the packaging machine is not matched with suitable capacity of the receiving magazines, which results in reduced processing rate of the latter.

Document FR-A-1.345.206 relates to a connection station between the outlet of a processing machine and installations for receiving processed articles, said station including a directing station and conveying means according to the preamble of claim 1.

The object of the present invention is to propose a connection station between the outlet of a packaging machine and magazines receiving packaged articles, which can fully exploit the productive capacity of the packaging machine, using known magazines.

The above object is to be obtained by proposing an connection station according to the appended claim 1, whose structure is simple and essential, and whose costs and dimensions are relatively contained.

The above mentioned objects are obtained in accordance with the contents of the claims.

The characteristic features of the invention, not resulting from what has been just said, will be better pointed out in the following, in accordance with the contents of claims and with reference to the enclosed Figures, in which:

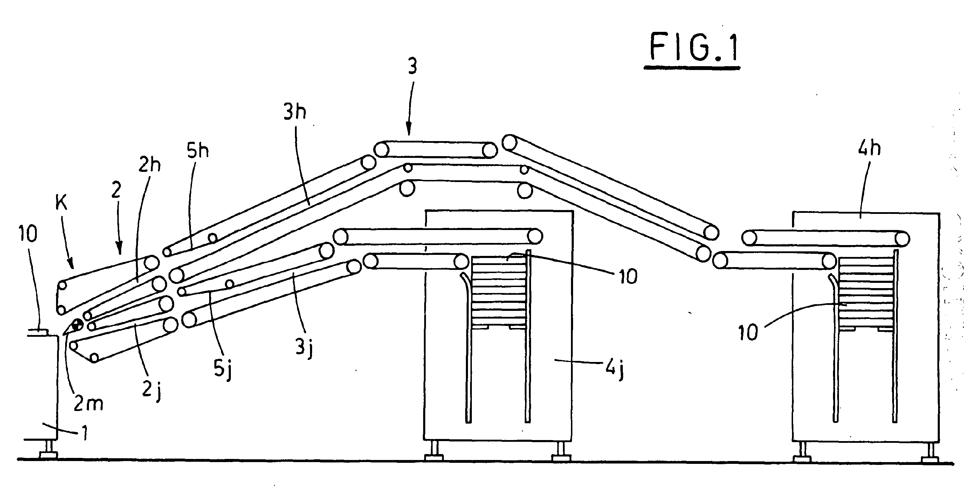

- Figure 1 is a front view of the proposed station;
- Figures 2A, 2B show the particular K of Figure 1, in two working steps of the above station.

With regard to the enclosed Figures, the reference numeral 1 indicates generally a packaging machine for packaging articles 10.

The machine drives the articles 10, packaged therein, toward its outlet section, in a feeding direction Z and with a speed V1.

A directing station 2, situated downstream of the machine 1, includes transport means (e.g. small endless belts), whose conformation define, e.g. a first and a second directing channels 2j, 2h.

The transport means include also a baffle 2m, which moves alternately between two extreme positions X, Y.

For functional reasons, the transport means work with the same speed V1 of the packaging machine 1.

The machine includes also conveying means 3 (e.g. small endless belts), functionally situated between the directing station 2 and two receiving magazines 4j, 4h.

The conveying means 3 define a first and a second feeding channels 3j, 3h, which set in communication respectively the first direction channel 2j with the first magazine 4j and the second direction channel 2h with the second magazine 4h.

The working speed V2 of the conveying means 3 is smaller than the speed V1 of the packaging machine 1 and of the transport means of the directing station 2: the speed V2 can be e.g. half the working speed V1.

Finally, the conveying means 3 include relative feeding channels 3j, 3h, which have corresponding sloping edges 5j, 5h, situated on the side turned to the directing station 2.

The operation of the connection station, proposed by the present invention, will be described now.

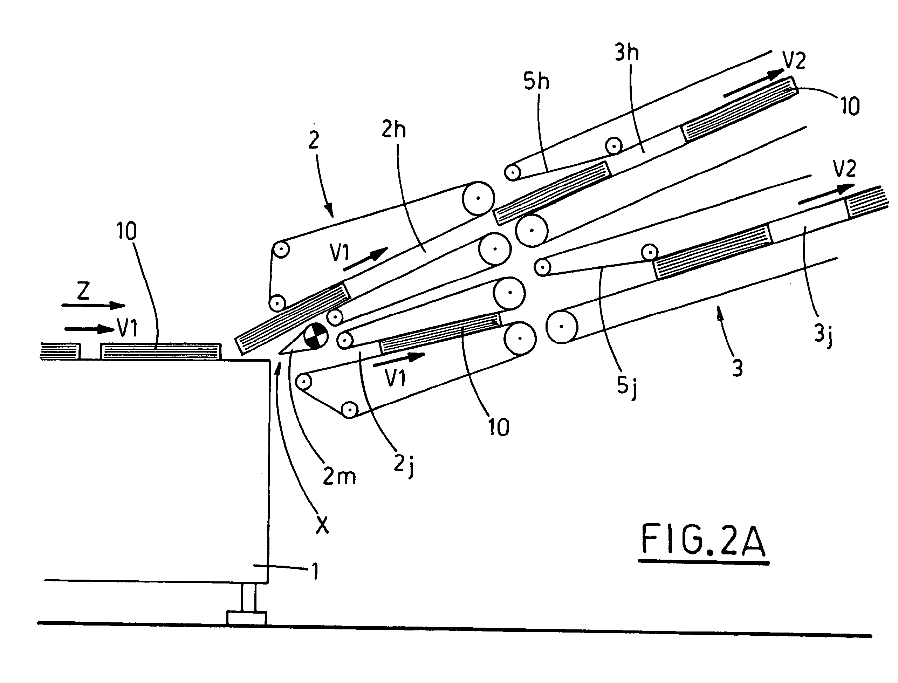

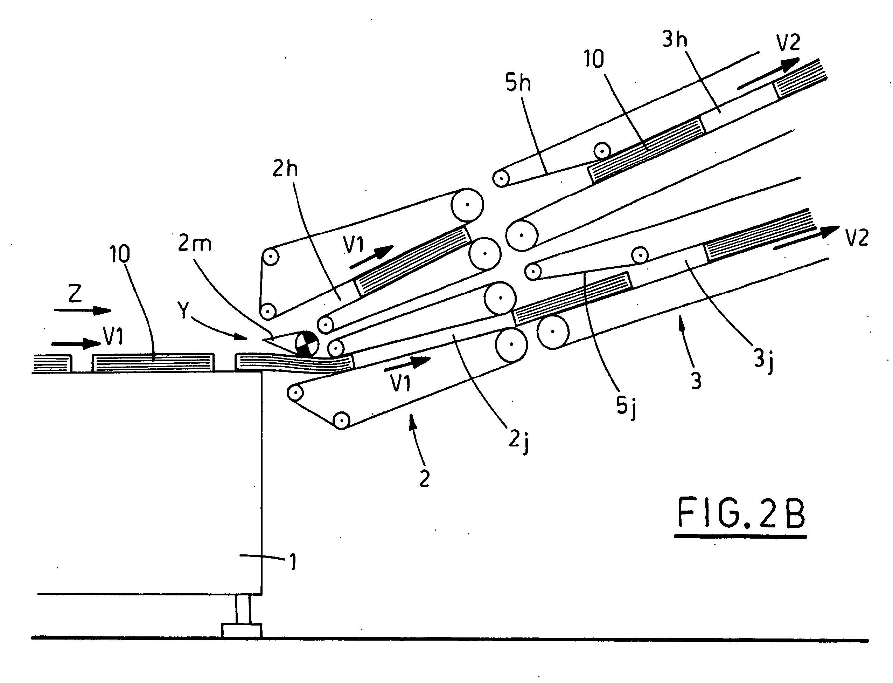

The task of the directing station 2 is to sort the packaged articles 10, coming from the packaging machine 1, on the respective first and second directing channels 2j, 2h; this is obtained due to the alternate movement of the baffle 2m, which directs a corresponding packaged article 10 to a relative direction channel 2j, 2h, by assuming one or the other of the extreme positions X, Y, see Figures 2A, 2B.

Consequently, the directing station 2 works in a cyclical way, because a packaged article 10 is directed first to one channel and then to the other, in a repetitive and systematic way.

Therefore, a packaged article 10 follows a path, which includes, from the outlet section of the packaging machine 1, the first direction channel 2j, the first feeding channel 3j and a first magazine 4j, or the second direction channel 2h, the second feeding channel 3h and the second magazine 4h.

The working speed V2 of the conveying means 3 is lower than the working speed V1 of the packaging machine 1, because the magazines receiving processing rate is usually lower than the processing rate of the machine 1.

The task of the sloping edges 5j, 5h is to facilitate the passage of the packaged articles 10 from a relative directing channel 2j, 2h to the corresponding feeding channel 3j, 3h, thus allowing the connection between the directing station 2 and the conveying means 3, which work with different speeds.

In particular, the presence of the sloping edges 5j, 5h avoids a possible "critical condition", in which the same article 10 can be subjected to the contemporary action of the small belts of the directing station 2 and of the ones of the conveying means 3.

Actually, the dimensions of each of the sloping edges are such, as to receive the packaged article 10 in such a way, as to disengage it from the action of the upstream belts (directing station 2) in step relation with the engaging of articles with the downstream belts (conveying means 3).

It is obvious that such need does not appear between a packaging machine 1 and the directing station 2, because the work with the same speed V1.

It is understood from the above considerations, that the station proposed by the present invention has a precise object to be interposed functionally between the above mentioned apparatuses, in order to improve their respective capacities, maintaining maximum working capacity of the packaging machine, as well as of the receiving magazines.

Further, what above has been obtained in a simple, elementary way and with relatively low costs and small dimensions.

## Claims

1. Connection station between the outlet of a packaging machine and magazines for receiving packaged articles, in which said packaging machine (1) drives said packaged articles (10) with a working speed (V1) toward its outlet section in a feeding direction (Z), comprising:
a directing station (2), situated downstream of said packaging machine (1), including transport means, whose conformation defines a first and a second directing channels (2j, 2h), and a baffle (2m), said baffle being movable alternatively between two extreme positions (X, Y) and having a configuration such as to direct said packaged articles (10) to said first or second directing channels (2j, 2h);
conveying means (3), situated between said directing station (2) and said receiving magazines (4j, 4h), defining a first and a second feeding channels (3j, 3h) for transporting said packaged articles (10), coming respectively from said first and second directing channels (2h, 2j), to the corresponding first and second receiving magazines (4h, 4j), each of said first and second feeding channels (3j, 3h) having a sloping edge (5j, 5h), made on the side turned toward the directing station (2),
and being **characterized in that** the first and second directing channels (2j, 2h) of said transport means are operated with a working speed (V1) equal to the working speed (V1) of the packaging machine (1), the first and second feeding channels (3j, 3h) of said conveying means (3) are operated with a working speed (V2) lower than the working speed (V1) of the packaging machine (1), and **in that** the dimension of each sloping edges (5j, 5h) of said first and second feeding channels (3j, 3h) being as such that a packaged article (10) coming from the directing station (2) is disengageable from said first or second directing channels (2j, 2h) in step relation with the engaging by said first or second feeding channel (3j, 3h), facilitating the passage of each of said packaged articles (10) from a relative directing channel (2j, 2h) to a corresponding feeding channel (3j, 3h).

2. Station, as claimed in claim 1, **characterized in that** said working speed (V2) is half the working speed (V1).

3. Station, as claimed in claim 1, **characterized in that** said transport means include small endless belts, the conformation of said small endless belts defining said first and second directing channels (2j, 2h).

4. Station, as claimed in claim 1, **characterized in that** said conveying means (3) include small endless belts, the conformation of said small endless belts defining said first and second feeding channels (3j, 3h).

## Patentansprüche

1. Verbindung zwischen dem Auslaß einer Verpackungsvorrichtung und Magazinen für die Aufnahme von verpackten Artikel, wobei die besagte Verpackungsvorrichtung (1) die besagten verpackten Artikel (10) mit einer Arbeitsgeschwindigkeit (V1) in Richtung auf ihren Auslaßbereich in einer Zuführstation (Z) befördert, bestehend aus:
einer Leitstation (2), die hinter der besagten Verpackungsvorrichtung (1) angeordnet ist, mit Transportmitteln, deren Begrenzungen erste und zweite Leitkanäle (2j, 2h) bildern, und einem Leitblech (2m), wobei das besagte Leitblech alternativ zwischen zwei Endpositionen (X, Y) bewegt werden kan, und mit einer Konfiguration, bei der die besagten verpackten Artikel (10) in die besagten ersten und zweiten Leitkanäle (2j, 2h) gelenkt werden können;
Fördermitteln (3), die zwischen der besagten Leitstation (2) und den besagten aufnehmenden Magazinen (4j, 4h) angeordnet sind und die einen ersten und einen zweiten Förderkanal (3j, 3h) bilden, um die besagten verpackten Artikel (10), die von den besagten ersten und zweiten Leitkanälen (2h, 2j) kommen, zu den zugeordneten ersten und zweiten aufnehmenden Magazinen (4h, 4j) zu fördern, wobei jeder der besagten ersten und zweiten Förderkanäle (3j, 3h) eine abfallende Flache (5j, 5h) aufweist, die an der der Leitstation (2) zugewandten Seite angeordnet ist,
und die **dadurch gekennzeichnet ist, daß** die ersten und zweiten Zeitkanäle (2j, 2h) der besagten Fördermittel mit einer Arbeitsgeschwindigkeit (V1) angetrieben werden, die gleich ist der Arbeitsgeschwindigkeit (V1) der Verpackungsvorrichtung (1), daß der erste und der zweite Förderkanal (3j, 3h) der besagten Fördermittel (3) mit einer Arbeitsgeschwindigkeit (V2) angetrieben werden, die geringer ist als die Arbeitsgeschwindigkeit (V1) der Verpackungsvorrichtung (1), und daß die Dimension der einzelnen abgeschrägten Flächen (5j, 5h) der besagten ersten und zweiten Förderkanäle (3j, 3h) derart ausgebildet ist, daß ein verpackter Artikel (10), der aus der Leitstation (2) kommt, In Schrittrelation mit der Beaufschlagung durch die besagten ersten oder zweiten Förderkanäle (3j, 3h) außer Eingriff mit den besagten ersten oder zweiten Leitkanälen (2j, 2h) bringbar ist, so daß auf diese Weise der Übergang der einzelnen besagten verpackten Artikel (10) von einem zugeordneten Leitkanal (2j, 2h) in einen zugeordneten Förderkanal (3j, 3h) erleichtert wird.

2. Station gemäß Anspruch 1, **dadurch gekennzeichnet, daß** die besagte Arbeitsgeschwindigkeit (V2) die Hälfte der Arbeitsgeschwindigkeit (V1) beträgt.

3. Station gemäß Anspruch 1, **dadurch gekennzeichnet, daß** die besagten Fördermittel kleine Endlosförderbänder umfassen, wobei die Beschaffenheit der besagten kleinen Endlosförderbänder die besagten ersten und zweiten Leitkanäle (2j, 2h) definiert.

4. Station gemäß Anspruch 1, **dadurch gekennzeichnet, daß** die besagten Fördermittel (3) kleine Endlosförderbänder umfassen, wobei die Beschaffenheit der besagten kleinen Endfosförderbänder die besagten ersten und zweiten Förderkanäle (3j, 3h) definiert.

## Revendications

1. Station de liaison entre la sortie d'une machine d'emballage et des magasins pour recevoir des articles emballés, dans laquelle ladite machine d'emballage (1) conduit lesdits articles emballés (10) avec une vitesse de travail (V1) vers sa section de sortie dans une direction d'alimentation (Z), comprenant:
une station de direction (2), située en aval de ladite machine d'emballage (1), comprenant des moyens de transport, dont la conformation définit un premier canal et un deuxième canal de direction (2j, 2h), et un déflecteur (2m), ledit déflecteur étant mobile alternativement entre deux positions extrêmes (X, Y) et ayant une configuration telle qu'il puisse diriger lesdits articles emballés (10) vers ledit premier ou deuxième canal de direction (2j, 2h);
des moyens de transport (3), situés entre ladite station de direction (2) et lesdits magasins de réception (4j, 4h), définissant un premier canal et un deuxième canal d'alimentation (3j, 3h) pour transporter lesdits articles emballés (10), provenant respectivement desdits premier et deuxième canaux de direction (2h, 2j), vers les premier et deuxième magasins de réception correspondants (4h, 4j), chacun desdits premier et deuxième canaux d'alimentation (3j, 3h) ayant un bord incliné (5j, 5h), présent sur le côté tourné vers la station de direction (2),
et étant **caractérisée en ce que** les premier et deuxième canaux de direction (2j, 2h) desdits moyens de transport sont actionnés avec une vitesse de travail (V1) égale à la vitesse de travail (V1) de la machine d'emballage (1), les premier et deuxième canaux d'alimentation (3j, 3h) desdits moyens de transport (3) sont actionnés avec une vitesse de travail (V2) inférieure à la vitesse de travail (V1) de la machine d'emballage (1), et **en ce que** la dimension de chaque bord incliné (5j, 5h) desdits premier et deuxième canaux d'alimentation (3j, 3h) étant telle qu'un article emballé (10) provenant de la station de direction (2) peut être libéré dudit premier ou deuxième canal de direction (2j, 2h) en relation étagée avec la mise en prise par ledit premier ou deuxième canal d'alimentation (3j, 3h), facilitant le passage de chacun desdits articles emballés (10) provenant d'un canal de direction relatif (2j, 2h) vers un canal d'alimentation correspondant (3j, 3h).

2. Station selon la revendication 1, **caractérisée en ce que** ladite vitesse de travail (V2) est égale à la moitié de la vitesse de travail (V1).

3. Station selon la revendication 1, **caractérisée en ce que** lesdits moyens de transport comprennent de petites bandes sans fin, la conformation desdites petites bandes sans fin définissant lesdits premier et deuxième canaux de direction (2j, 2h).

4. Station selon la revendication 1, **caractérisée en ce que** lesdits moyens de transport (3) comprennent de petites bandes sans fin, la conformation desdites petites bandes sans fin définissant lesdits premier et deuxième canaux d'alimentation (3j, 3h).
